# EUROPEAN PATENT SPECIFICATION

(11) **EP 1 729 463 B1**
(45) Date of publication and mention of the grant of the patent: **25.11.2009**
(21) Application number: 06010259.7
(22) Date of filing: 18.05.2006
(51) Int. Cl.: H04W 72/12

(54) **Method and apparatus for collaborative coexistence between bluetooth and IEEE 802.11 G with both technologies integrated onto a system-on-a-chip (SOC) device**
Verfahren und Vorrichtung für gemeinschaftliche Koexistenz zwischen Bluetooth und IEEE 802.11 G mit beiden Technologien integriert auf einer System-auf-Chip (SOC) Vorrichtung
Procédé et appareil pour une coexistence collaborant entre bluetooth et IEEE 802.11 G avec les deux technologies intégrés dans un dispositif système-sur-une-puce (SOC)

(30) Priority: 01.06.2005 US 686483 P; 23.03.2006 US 387309
(43) Date of publication of application: 06.12.2006
(73) Proprietor: Broadcom Corporation, Irvine, CA 92617 (US)
(72) Inventor: Ibrahim, Brima, 92656 Aliso Viejo CA (US); Desai, Prasanna, 92024 Olivehnain CA (US)
(74) Representative: Jehle, Volker Armin

(56) References cited:
- EP-A- 1 583 295
- EP-A1- 1 119 137
- WO-A-2004/023746
- US-A1- 2002 061 031
- US-A1- 2003 125 019
- US-A1- 2005 025 174

## Description

### FIELD OF THE INVENTION

Certain embodiments of the invention relate to interference in communication systems. More specifically, certain embodiments of the invention relate to a method and apparatus for collaborative coexistence between Bluetooth and IEEE 802.11 g with both technologies integrated onto a system-on-a-chip (SOC) device.

### BACKGROUND OF THE INVENTION

The use of Wireless Personal Area Networks (WPANs) has been gaining popularity in a great number of applications because of the flexibility and convenience in connectivity they provide. WPAN systems, such as those based on Class 2 Bluetooth (BT) technology, generally replace cumbersome cabling and/or wiring used to connect peripheral devices and/or mobile terminals by providing short distance wireless links that allow connectivity within a 10-meter range. Though, for a limited number of applications, higher-powered Class 1 BT devices may operate within a 100-meter range. In contrast to WPAN systems, Wireless Local Area Networks (WLANs) provide connectivity to devices that are located within a slightly larger geographical area, such as the area covered by a building or a campus, for example. WLAN systems are based on IEEE 802.11 standard specifications, typically operate within a 100-meter range, and are generally utilized to supplement the communication capacity provided by traditional wired Local Area Networks (LANs) installed in the same geographic area as the WLAN system.

In some instances, WLAN systems may be operated in conjunction with WPAN systems to provide users with an enhanced overall functionality. For example, Bluetooth technology may be utilized to connect a laptop computer or a handheld wireless terminal to a peripheral device, such as a keyboard, mouse, headphone, and/or printer, while the laptop computer or the handheld wireless terminal is also connected to a campus-wide WLAN network through an access point (AP) located within the building.

Both Bluetooth and WLAN radio devices, such as those used in, for example, handheld wireless terminals, generally operate in the 2.4 GHz (2.4000-2.4835 GHz) Industrial, Scientific, and Medical (ISM) unlicensed band. Other radio devices, such as those used in cordless phones, may also operate in the ISM unlicensed band. While the ISM band provides a suitable low-cost solution for many of short-range wireless applications, it may also have some drawbacks when multiple users operate simultaneously. For example, because of the limited bandwidth, spectrum sharing may be necessary to accommodate multiple users. Multiple active users may also result in significant interference between operating devices. Moreover, in some instances, microwave ovens may also operate in this frequency spectrum and may produce significant interference or blocking signals that may affect Bluetooth and/or WLAN transmissions.

When operating a Bluetooth radio and a WLAN radio in, for example, a wireless device, at least two different types of interference effects may occur. First, when an interfering signal is present in a transmission medium along with the signal-of-interest, a low signal-to-noise-plus-interference ratio (SINR) may result. In this instance, for example, a Bluetooth signal may interfere with a WLAN signal or a WLAN signal may interfere with a Bluetooth signal. The second effect may occur when the Bluetooth and WLAN radio devices are collocated, that is, when they are located in close proximity to each other so that there is a small radio frequency (RF) path loss between their corresponding radio front-end receivers. In this instance, the isolation between the Bluetooth radio front-end and the WLAN radio front-end may be as low as 10 dB, for example. As a result, one radio may desensitize the front-end of the other radio upon transmission. Moreover, since Bluetooth employs transmit power control, the collocated Bluetooth radio may step up its power level when the signal-to-noise ratio (SNR) on the Bluetooth link is low, effectively compromising the front-end isolation between radio devices even further. Low noise amplifiers (LNAs) in the radio front-ends may not be preceded by a channel selection filter and may be easily saturated by the signals in the ISM band, such as those from collocated transmissions. The saturation may result in a reduction in sensitivity or desensitization of the receiver portion of a radio front-end, which may reduce the radio front-end's ability to detect and demodulate the desired signal.

Packet communication in WLAN systems requires acknowledgement from the receiver in order for the communication to proceed. When the isolation between collocated radio devices is low, collisions between WLAN communication and Bluetooth communication, due to greater levels of mutual interference than if the isolation were high, may result in a slowdown of the WLAN communication, as the access point does not acknowledge packets. This condition may continue to spiral downwards until the access point drops the WLAN station. If, in order to avoid this condition, WLAN communication in collocated radio devices is given priority over all Bluetooth communication, then isochronous Bluetooth packet traffic, which does not have retransmission capabilities, may be starved of communication bandwidth. Moreover, this approach may also starve other Bluetooth packet traffic of any communication access. Collocated WLAN/Bluetooth radio devices should therefore be operated so as to maintain WLAN communication rates high while also providing access to Bluetooth communication when necessary.

Different techniques have been developed to address the low isolation problem that occurs between collocated Bluetooth and WLAN radio devices in coexistent operation. These techniques may take advantage of either frequency and/or time orthogonality mechanisms to reduce interference between collocated radio devices. Moreover, these techniques may result from so-called collaborative or non-collaborative mechanisms in Bluetooth and WLAN radio devices, where collaboration refers to any direct communication between the protocols. For example, Bluetooth technology utilizes Adaptive Frequency Hopping (AFH) as a frequency division multiplexing (FDM) technique that minimizes channel interference. In AFH, the physical channel is characterized by a pseudo-random hopping, at a rate of 1600 hops-per-second, between 79 1 MHz channels in the Bluetooth piconet. AFH provides a non-collaborative mechanism that may be utilized by a Bluetooth device to avoid frequencies occupied by a spread spectrum system such as a WLAN system. In some instances, the Bluetooth radio may be adapted to modify its hopping pattern based on, for example, frequencies in the ISM spectrum that are not being occupied by other users.

Even when frequency division multiplexing techniques are applied, significant interference may still occur because a strong signal in a separate channel may still act as a blocking signal and may desensitize the radio front-end receiver, that is, increase the receiver's noise floor to the point that the received signal may not be clearly detected. For example, a collocated WLAN radio front-end transmitter generating a 15 dBm signal acts as a strong interferer or blocker to a collocated Bluetooth radio device receiver when the isolation between radio devices is only 10 dB. Similarly, when a Bluetooth radio device is transmitting and a WLAN radio device is receiving, particularly when the Bluetooth radio front-end transmitter is operating as a 20 dBm Class 1 type, the WLAN radio device receiver may be desensed by the Bluetooth transmission as the isolation between radios is reduced.

Other techniques may be based on collaborative coexistence mechanisms, such as those described in the IEEE 802.15.2 - 2003 Recommended Practice for Information Technology - Part 15.2: Coexistence of Wireless Personal Area Networks with Other Wireless Devices Operating in the Unlicensed Frequency Bands. For example, these techniques may comprise Medium Access Control (MAC) layer mechanisms or Physical (PHY) layer mechanisms. The MAC layer techniques may comprise, for example, the Alternating Wireless Medium Access (AWMA) technique or the Packet Traffic Arbitration (PTA) technique. Both the AWMA and the PTA techniques provide a time division multiplexing (TDM) approach to the collocated radio device isolation problem. For example, the AWMA technique partitions a WLAN communication interval into two segments: one for the WLAN system and one for the WPAN system. Each wireless system is then restricted to transmissions in their allocated time segments. On the other hand, the PTA technique provides for each communication attempt by either a collocated WLAN radio device or a Bluetooth radio device to be submitted for arbitration and approval. The PTA may then deny a communication request that would result in collision or interference. The PHY layer technique may comprise, for example, a programmable notch filter in the WLAN radio device receiver to filter out narrow-band WPAN or Bluetooth interfering signals. These techniques may result in some transmission inefficiencies or in the need of additional hardware features in order to achieve better coexistent operation.

Other collaborative coexistence mechanisms may be based on proprietary technologies. For example, in some instances, firmware in the collocated WLAN radio device may be utilized to poll a status signal in the collocated Bluetooth radio device to determine whether Bluetooth communication is to occur. However, polling the Bluetooth radio device may have to be performed on a fairly constant basis and may detract the WLAN radio device from its own WLAN communication operations. If a polling window is utilized instead, where the polling window may be as long as several hundred microseconds, the WLAN radio device has adequate time available to poll the BT radio device, which may indicate that BT communication is to occur. In other instances, the collocated WLAN and Bluetooth radio devices may utilize an interrupt-driven arbitration approach. In this regard, considerable processing time may be necessary for handling the interrupt operation and to determine the appropriate communication schedule based on the priority and type of WLAN and Bluetooth packets.

EP 1 583 295 A2 discloses a collaboration scheme for wireless communications devices implemented on a single CMOS integrated circuit. By providing a dynamically updateable, multiple-priority protocol, more differentiation between traffic types is provided and response time (latency) is reduced by adjusting the priority allocations between the devices when an application on one device requires greater throughput.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for collaborative coexistence between Bluetooth and IEEE 802.11 g with both technologies integrated onto a system-on-a-chip (SOC) device, substantially as shown in and/or described in connection with at least one of the figures, as set forth more completely in the claims.
According to an aspect of the invention, a method for providing wireless communication is provided, the method comprising scheduling WLAN communication and Bluetooth communication in a single radio chip that handles at least a Bluetooth (BT) communication protocol and a Wireless Local Area Network (WLAN) communication protocol based on priority levels assigned to said WLAN communication and Bluetooth communication. Scheduling WLAN communication and Bluetooth communication comprises the step of coordinating a transmission of WLAN packets during WLAN transmission opportunities and a transmission of extended synchronous connection orientated (eSCO) packets during eSCO transmission windows by utilizing timing information provided by a global clock used by a WLAN radio part and a Bluetooth radio part of the single radio chip.
The step of coordinating the transmission of WLAN packets and eSCO packets comprises utilizing Bluetooth retransmission information and WLAN transmission opportunity information to schedule a retransmission of an eSCO packet when necessary, scheduling transmission of an eSCO packet, and scheduling retransmission of the eSCO packet outside the WLAN transmission opportunity window using a retransmission window if the eSCO packet falls within the WLAN transmission opportunity window.
Advantageously, the method further comprises promoting said priority level assigned to said WLAN communication.
Advantageously, the method further comprises demoting said priority level assigned to said WLAN communication.
Advantageously, the method further comprises promoting said priority level assigned to said Bluetooth communication.
Advantageously, the method further comprises demoting said priority level assigned to said Bluetooth communication.
Advantageously, the method further comprises modifying said priority level assigned to said Bluetooth communication based on said WLAN communication.
Advantageously, the method further comprises modifying said priority level assigned to said WLAN communication based on said BT communication.
According to an aspect of the invention, a machine-readable storage is provided having stored thereon, a computer program having at least one code section for providing wireless communication, the at least one code section being executable by a machine for causing the machine to perform steps comprising scheduling WLAN communication and Bluetooth communication in a single radio chip that handles at least a Bluetooth (BT) communication protocol and a Wireless Local Area Network (WLAN) communication protocol based on priority levels assigned to said WLAN communication and Bluetooth communication. Scheduling WLAN communication and Bluetooth communication comprises the step of coordinating a transmission of WLAN packets during WLAN transmission opportunities and a transmission of extended synchronous connection orientated (eSCO) packets during eSCO transmission windows by utilizing timing information provided by a global clock used by a WLAN radio part and a Bluetooth radio part of the single radio chip.
The step of coordinating the transmission of WLAN packets and eSCO packets comprises utilizing Bluetooth retransmission information and WLAN transmission opportunity information to schedule a retransmission of an eSCO packet when necessary, scheduling transmission of an eSCO packet, and scheduling retransmission of the eSCO packet outside the WLAN transmission opportunity window using a retransmission window if the eSCO packet falls within the WLAN transmission opportunity window.
Advantageously, the machine-readable storage further comprises code for promoting said priority level assigned to said WLAN communication.
Advantageously, the machine-readable storage further comprises code for demoting said priority level assigned to said WLAN communication.
Advantageously, the machine-readable storage further comprises code for promoting said priority level assigned to said Bluetooth communication.
Advantageously, the machine-readable storage further comprises code for demoting said priority level assigned to said Bluetooth communication.
Advantageously, the machine-readable storage further comprises code for modifying said priority level assigned to said Bluetooth communication based on said WLAN communication.
Advantageously, the machine-readable storage further comprises code for modifying said priority level assigned to said WLAN communication based on said BT communication.

According to an aspect of the invention, a system for providing wireless communication is provided, the system comprising:
a single radio chip comprising a scheduler;
   said single radio chip is adapted to handle at least a Bluetooth (BT) communication protocol and a Wireless Local Area Network (WLAN) communication protocol based on priority levels assigned to WLAN communication and Bluetooth communication; and
said scheduler is adapted to schedule said WLAN communication and Bluetooth communication. Said scheduler is further adapted to coordinate a transmission of WLAN packets during WLAN transmission opportunities and a transmission of eSCO packets during eSCO transmission windows by utilizing timing information provided by a global clock used by a WLAN radio part and a Bluetooth radio part of the single radio chip. Said scheduler is adapted to utilize Bluetooth retransmission information and WLAN transmission opportunity information to schedule a retransmission of an eSCO packet when necessary, wherein said scheduler is adapted to schedule transmission of an eSCO packet, and, if the eSCO packet falls within the WLAN transmission opportunity window, to schedule retransmission of the eSCO packet outside the WLAN transmission opportunity window using a retransmission window.
Advantageously, said single radio chip is adapted to promote said priority level assigned to said WLAN communication.
Advantageously, said single radio chip is adapted to demote said priority level assigned to said WLAN communication.
Advantageously, said single radio chip is adapted to promote said priority level assigned to said Bluetooth communication.
Advantageously, said single radio chip is adapted to demote said priority level assigned to said Bluetooth communication.
Advantageously, said single radio chip is adapted to modify said priority level assigned to said Bluetooth communication based on said WLAN communication.
Advantageously, said single radio chip is adapted to modify said priority level assigned to said WLAN communication based on said Bluetooth communication.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary WLAN infrastructure network comprising basic service sets (BSSs) integrated using a common distribution system (DS), in connection with an embodiment of the invention.

FIG. 1B is a block diagram of an exemplary WLAN infrastructure network comprising a basic service set (BSS) with stations that support WLAN/Bluetooth coexistence, in accordance with an embodiment of the invention.

FIG. 1C is a block diagram that illustrates an exemplary usage model for a coexistence terminal with collocated WLAN and Bluetooth radio devices, in accordance with an embodiment of the invention.

FIG. 2 is a block diagram that illustrates an exemplary radio chip that supports WLAN and Bluetooth radio operations, in accordance with an embodiment of the invention.

FIG. 3 is a block diagram that illustrates an exemplary implementation of a packet traffic scheduler (PTS) in a single radio chip that supports WLAN and Bluetooth radio operations, in accordance with an embodiment of the invention.

FIG. 4A is a timing diagram that illustrates an exemplary retransmission scheduling of EV3 Bluetooth eSCO packets for a VoWLAN and Bluetooth usage model, in accordance with an embodiment of the invention.

FIG. 4B is a timing diagram that illustrates an exemplary retransmission scheduling of 3-EV3 Bluetooth eSCO packets a VoWLAN and Bluetooth usage model, in accordance with an embodiment of the invention.

FIG. 5 is a flow diagram that illustrates exemplary steps in the retransmission scheduling of Bluetooth eSCO packets, in accordance with an embodiment of the invention.

FIG. 6A is a flow diagram that illustrates exemplary steps in the scheduling of Bluetooth ACL packets and a WLAN web-browsing stream, in accordance with an embodiment of the invention.

FIG. 6B is a flow diagram that illustrates exemplary steps in the scheduling of Bluetooth ACL packets and a WLAN stereo audio stream, in accordance with an embodiment of the invention.

FIG. 7 is a block diagram illustrating an exemplary usage model for the single IC that supports WLAN and Bluetooth radio operations with one antenna, in accordance with an embodiment of the invention.

### DETAILED DESCRIPTION OF THE INVENTION

Certain embodiments of the invention may be found in a method and apparatus for collaborative coexistence between Bluetooth and IEEE 802.11 g wireless local area network (WLAN) when both technologies are combined onto a system-on-a-chip (SOC) device. In a single integrated circuit (IC) that handles Bluetooth and WLAN technologies, a WLAN priority level may be selected for WLAN transmissions and a Bluetooth priority level may be selected for Bluetooth transmissions. The WLAN and Bluetooth priority levels may be selected from a plurality of priority levels. A packet transfer scheduler (PTS) may schedule the transmission of WLAN and Bluetooth signals in accordance with the selected priority levels. In some instances, the PTS may promote or demote the priority levels for WLAN and/or Bluetooth transmissions based on traffic needs.

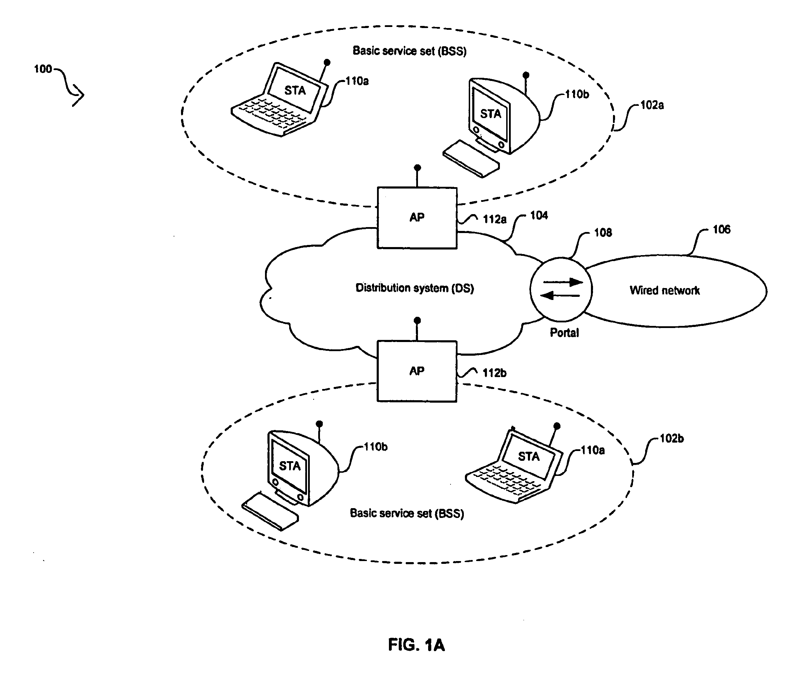

FIG. 1A is a block diagram of an exemplary WLAN infrastructure network comprising basic service sets (BSSs) integrated using a common distribution system (DS), in connection with an embodiment of the invention. Referring to FIG. 1A, the exemplary WLAN infrastructure network 100 shown may comprise a first BSS 102a, a second BSS 102b, a DS 104, a wired network 106, a portal 108, a first access point (AP) 112a, a second AP 102b, and a plurality of WLAN stations (STAs). The BSSs 102a and 102b may represent a fundamental building block of the IEEE 802.11 (WLAN) architecture and may be defined as a group of stations (STA_{S}) that are under the direct control of a single coordination function. The geographical area covered by a BSS is known as the basic service area (BSA). The DS 104 may be utilized to integrate the BSSs 102a and 102b and may comprise suitable hardware, logic, circuitry, and/or code that may be adapted to operate as a backbone network that is responsible for Medium Access Control (MAC) level transport in the WLAN infrastructure network 100. The DS 104, as specified by the IEEE 802.11 standard, is implementation independent. For example, the DS 104 may be implemented utilizing IEEE 802.3 Ethernet Local Area Network (LAN), IEEE 802.4 token bus LAN, IEEE 802.5 token ring LAN, Fiber Distributed Data Interface (FDDI) Metropolitan Area Network (MAN), or another IEEE 802.11 wireless medium. The DS 104 may be implemented utilizing the same physical medium as either the first BSS 102a or the second BSS 102b. However, the DS 104 is logically different from the BSSs and may be utilized only to transfer packets between the BSSs and/or to transfer packets between the BSSs and the wired network 106.

The wired network 106 may comprise suitable hardware, logic, circuitry, and/or code that may be adapted to provide wired networking operations. The wired network 106 may be accessed from the WLAN infrastructure network 100 via the portal 108. The portal 108 may comprise suitable hardware, logic, circuitry, and/or code and may be adapted to integrate the WLAN infrastructure network 100 with non-IEEE 802.11 networks. Moreover, the portal 108 may also be adapted to perform the functional operations of a bridge, such as range extension and/or translation between different frame formats, in order to integrate the WLAN infrastructure network 100 with IEEE 802.11-based networks.

The APs 112a and 112b may comprise suitable hardware, logic, circuitry, and/or code that may be adapted to support range extension of the WLAN infrastructure network 100 by providing the integration points necessary for network connectivity between the BSSs. The STA 110a and the STA 110b correspond to WLAN-enabled terminals that comprise suitable hardware, logic, circuitry, and/or code that may be adapted to provide connectivity to the WLAN infrastructure network 100 via the APs. The STA 110a shown is a laptop computer and may correspond to a mobile station or terminal within the BSS and the STA 110b shown is a desktop computer and may correspond to a fixed or stationary terminal within the BSS. Each BSS may comprise a plurality of mobile or fixed stations and may not be limited to the exemplary implementation shown in FIG. 1A.

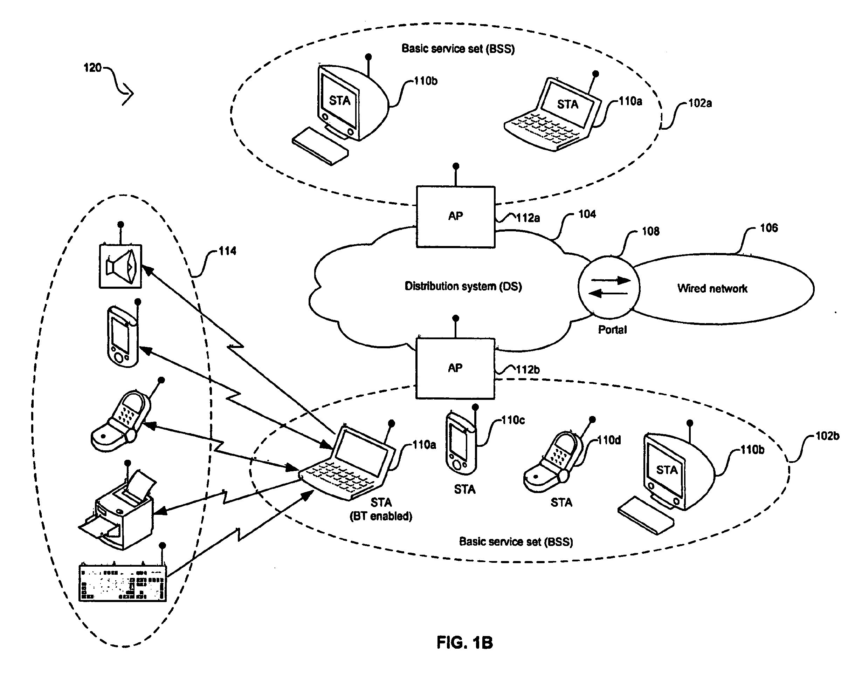

FIG. 1 B is a block diagram of an exemplary WLAN infrastructure network comprising a basic service set (BSS) with stations that support WLAN/Bluetooth coexistence, in accordance with an embodiment of the invention. Referring to FIG. 1 B, the exemplary WLAN infrastructure network 120 shown differs from the WLAN infrastructure network 100 in FIG. 1A in that at least one BSS comprises at least one station or terminal that supports Bluetooth technology. In this regard, the second BSS 102b comprises additional mobile terminals or stations such as a Personal Digital Assistant (PDA) 110c and a mobile phone 110d while the laptop computer 110a is now shown to be Bluetooth-enabled. The peripheral devices 114 shown may be part of the Wireless Personal Area Network (WPAN) supported by the Bluetooth-enabled laptop computer. For example, the laptop computer 110a may communicate via Bluetooth technology with a keyboard, a mouse, a printer, a mobile phone, a PDA, and/or a set of headphones or speakers, where these devices and the laptop computer 110a may form an ad-hoc Bluetooth piconet. Generally, a Bluetooth piconet may comprise a master device or terminal and up to seven slave devices or terminals. In this exemplary implementation, the laptop computer 110a may correspond to the master Bluetooth terminal and the peripheral devices 114 may correspond to the slave Bluetooth terminals.

The Bluetooth-enabled laptop computer 110a in FIG. 1 B may comprise a WLAN radio device and a Bluetooth radio device that allows it to communicate with the WLAN infrastructure network 100 via the AP 112b and with the Bluetooth piconet respectively. Because of the size of the laptop computer 110a, locating the WLAN and BT radio devices in the same terminal may result in signal interference between WLAN and BT communications. When the PDA 110c and/or the mobile phone 110d are Bluetooth-enabled, the small form factor of these coexistence terminals may result in a small radio frequency (RF) path loss between WLAN and BT radio devices and likely interference between WLAN and BT communications.

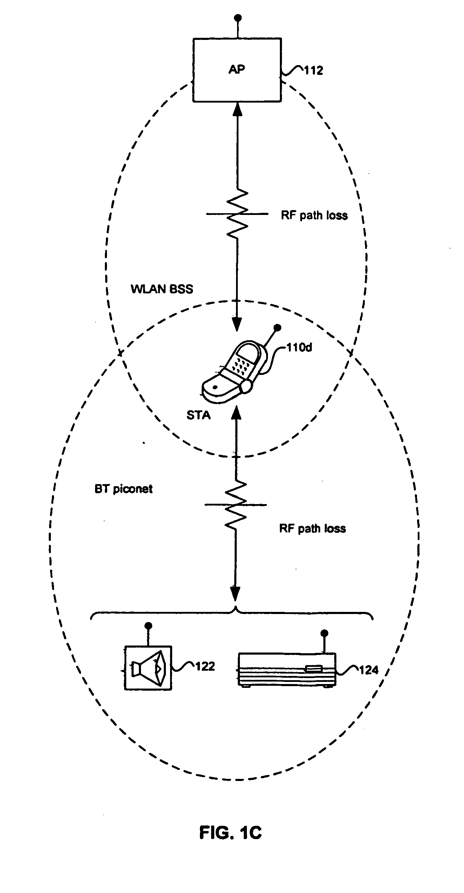

FIG. 1C is a block diagram that illustrates an exemplary usage model for a coexistence terminal with collocated WLAN and Bluetooth radio devices, in accordance with an embodiment of the invention. Referring to FIG. 1C, the mobile phone 110d may comprise a WLAN radio device to communicate with the AP 112c. The RF path loss between the AP 112c and the mobile phone 110d may be, for example, 65 dB for 10 meters. The IEEE 802.15.2, for example, provides a formula for calculating the RF path loss. The mobile phone 110d may also be Bluetooth-enabled and may comprise a Bluetooth radio device to communicate with, for example, a Bluetooth headset 122 and/or a home gateway 124 with Bluetooth cordless telephony capability. Because of the small form factor of the mobile phone 110d, the WLAN and Bluetooth radio devices may be in such close proximity to each other within the same coexistence terminal that the isolation between them is sufficiently low to allow desensitization of one radio device by the other's transmissions.

The Bluetooth-enabled mobile phone 110d may comprise two maximum transmission power levels. For example, the mobile phone 110d may operate as a Class 1 power level terminal with a maximum transmission power of 20 dBm to communicate with the home gateway 124. In another example, the mobile phone 110d may operate as a Class 2 power level terminal with a maximum transmission power of 4 dBm to communicate with the Bluetooth headset 122. The Bluetooth headset 122 may comprise suitable hardware, logic, circuitry, and/or code that may be adapted to receive and/or transmit audio information. For example, the Bluetooth handset 122 may be adapted to receive and/or transmit Continuous Variable Slope Delta (CVSD) modulated voice from the mobile phone 110d or receive A2DP, such as MP3, from the mobile phone 110d. The home gateway 124 may comprise suitable hardware, logic, circuitry, and/or code that may be adapted to receive and/or transmit data and/or audio information. For example, the home gateway 124 may receive and/or transmit 64 kb/s CVSD modulated voice.

In operation, the mobile phone 110d may receive voice or audio content from the WLAN infrastructure network via the AP 112c and may communicate the voice or audio contents to the Bluetooth headset 122 or the voice contents to the home gateway 124. Similarly, the Bluetooth headset 122 the home gateway 124 may communicate voice contents to the Bluetooth-enabled mobile phone 110d which in turn may communicate the voice contents to other users through the WLAN infrastructure network.

A Bluetooth-enabled station, such as the Bluetooth-enabled mobile phone 110d in FIG. 1C, for example, may support the communication of multiple Bluetooth packets. For example, a Bluetooth-enabled station may support common packets types, synchronous connection-oriented (SCO) logical transport packets, extended SCO (eSCO) logical transport packets, and/or asynchronous connection-oriented (ACL) logical transport packets.

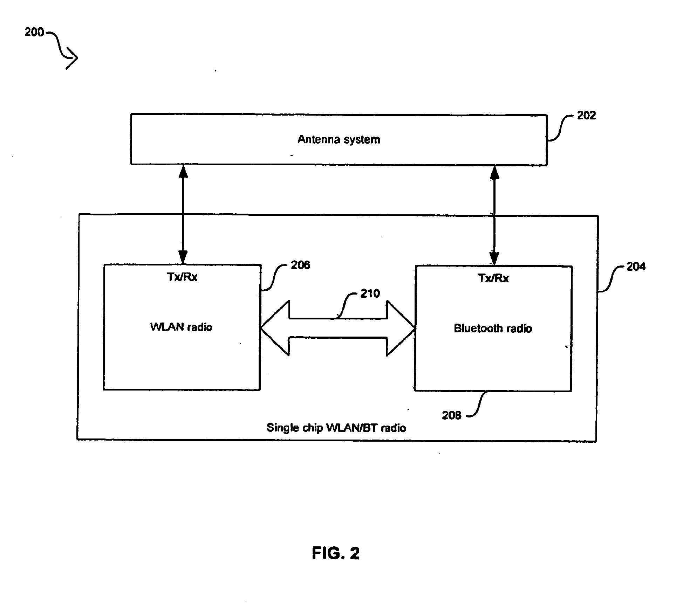

FIG. 2 is a block diagram that illustrates an exemplary single radio chip that supports WLAN and Bluetooth radio operations, in accordance with an embodiment of the invention. Referring to FIG. 2, there is shown a WLAN/Bluetooth collaborative radio architecture 200 that may comprise a WLAN/Bluetooth coexistence antenna system 202 and a single chip WLAN/Bluetooth (WLAN/BT) radio device 204. The single chip WLAN/BT radio device 204 may comprise a WLAN radio portion 206 and a Bluetooth radio portion 208. The single chip WLAN/BT radio device 204 may be implemented based on a system-on-chip (SOC) architecture, for example.

The WLAN/Bluetooth coexistence antenna system 202 may comprise suitable hardware, logic, and/or circuitry that may be adapted to provide WLAN and Bluetooth communication between external devices and a coexistence terminal. The WLAN/Bluetooth coexistence antenna system 202 may comprise at least one antenna for the transmission and reception of WLAN and Bluetooth packet traffic. In this regard, the antenna or antennas utilized in the WLAN/Bluetooth coexistence antenna system 202 may be designed to meet the form factor requirements of the coexistence terminal.

The WLAN radio portion 206 may comprise suitable logic, circuitry, and/or code that may be adapted to process WLAN protocol packets for communication. The WLAN radio portion 206 may be adapted to transfer and/or receive WLAN protocol packets and/or information to the WLAN/Bluetooth coexistence antenna system 202 via a single transmit/receive (Tx/Rx) port. In some instances, the transmit port (Tx) may be implemented separately from the receive port (Rx). The WLAN radio portion 206 may also be adapted to generate signals that control at least a portion of the operation of the WLAN/Bluetooth coexistence antenna system 202. Firmware operating in the WLAN radio portion 206 may be utilized to schedule and/or control WLAN packet communication.

The WLAN radio portion 206 may also be adapted to receive and/or transmit priority signals 210. The priority signals 210 may be utilized to schedule and/or control the collaborative operation of the WLAN radio portion 206 and the Bluetooth radio portion 208. In this regard, the priority signals 210 may comprise a plurality of signals to implement various levels of transmission priority. For example, a single signal implementation may result in two transmission priority levels, a two-signal implementation may result in up to four different transmission priority levels, and a three-signal implementation may result in up to eight different transmission priority levels.

The Bluetooth radio portion 208 may comprise suitable logic, circuitry, and/or code that may be adapted to process Bluetooth protocol packets for communication. The Bluetooth radio portion 208 may be adapted to transfer and/or receive Bluetooth protocol packets and/or information to the WLAN/Bluetooth coexistence antenna system 202 via a single transmit/receive (Tx/Rx) port. In some instances, the transmit port (Tx) may be implemented separately from the receive port (Rx). The Bluetooth radio portion 208 may also be adapted to generate signals that control at least a portion of the operation of the WLAN/Bluetooth coexistence antenna system 202. Firmware operating in the Bluetooth radio portion 208 may be utilized to schedule and/or control Bluetooth packet communication. The Bluetooth radio portion 208 may also be adapted to receive and/or transmit priority signals 210. A portion of the operations supported by the WLAN radio portion 206 and a portion of the operations supported by the Bluetooth radio portion 208 may be performed by common logic, circuitry, and/or code.

In some instances, at least a portion of either the WLAN radio portion 206 or the Bluetooth radio portion 208 may be disabled and the wireless terminal may operate in a single-communication mode, that is, coexistence may be disabled. When at least a portion of the WLAN radio portion 206 is disabled, the WLAN/Bluetooth coexistence antenna system 202 may utilize a default configuration to support Bluetooth communication. When at least a portion of the Bluetooth radio portion 208 is disabled, the WLAN/Bluetooth coexistence antenna system 202 may utilize a default configuration to support WLAN communication.

Packet communication between the WLAN/Bluetooth coexistence antenna system 202 and the single chip WLAN/Bluetooth (WLAN/BT) radio device 204 may take place via a radio front-end topology in the single chip WLAN/Bluetooth (WLAN/BT) radio device 204. The radio front-end topology may be implemented partially in the WLAN radio portion 206 and/or partially in the Bluetooth radio portion 208, for example.

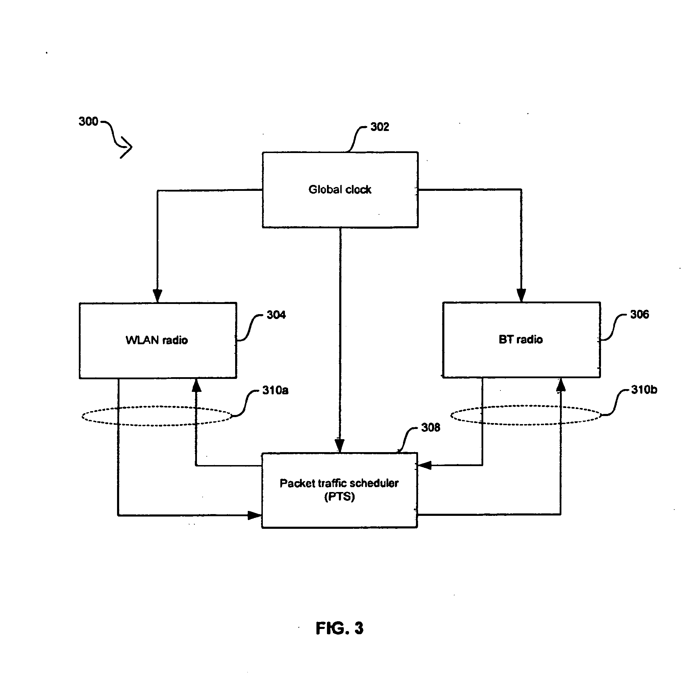

FIG. 3 is a block diagram that illustrates an exemplary implementation of a packet traffic scheduler (PTS) in a single radio chip that supports WLAN and Bluetooth radio operations, in accordance with an embodiment of the invention. Referring to FIG. 3, there is shown a single chip WLAN/BT radio device 300 that may comprise a global clock 302, WLAN radio portion 304, a Bluetooth radio portion 306, and a packet traffic scheduler (PTS) 308. The global clock 302 may be chosen to be the clock that corresponds to the Bluetooth radio portion 306, for example.

The WLAN radio portion 304 may comprise suitable logic, circuitry, and/or code that may be adapted to process WLAN protocol packets for communication. In this regard, the WLAN radio portion 304 may be substantially as the WLAN radio portion 206 described in FIG. 2. The WLAN radio portion 304 may be adapted to communicate with the PTS 308 via control and/or data signals 310a. A portion of the control and/or data signals 310a may comprise WLAN transmission priority level information. The control and/or data signals 310a may comprise information of a current WLAN transmission priority level. The control and/or data signals 310a may comprise information as to future WLAN transmission requirements by the WLAN radio portion 304. The control and/or data signals 310a may also comprise information to reduce or increase the WLAN transmission priority level in the WLAN radio portion 304. The PTS 308 may modify the WLAN transmission priority level via the control and/or data signals 310a based, at least in part, on Bluetooth transmission priority level information received by the PTS 308 from the Bluetooth radio portion 306. The PTS 308 may also be adapted to modify the WLAN transmission priority level base in, for example, the type of packets that are being communicated.

The Bluetooth radio portion 306 may comprise suitable logic, circuitry, and/or code that may be adapted to process Bluetooth protocol packets for communication. In this regard, the Bluetooth radio portion 306 may be substantially similar to the Bluetooth radio portion 208 described in FIG. 2. The Bluetooth radio portion 306 may be adapted to communicate with the PTS 308 via control and/or data signals 310b. A portion of the control and/or data signals 310b may comprise Bluetooth transmission priority level information. The control and/or data signals 310b may comprise information related to a current Bluetooth transmission priority level. The control and/or data signals 310b may comprise information related to future Bluetooth transmission requirements by the Bluetooth radio portion 306. The control and/or data signals 310b may also comprise information to reduce or increase the Bluetooth transmission priority level in the Bluetooth radio portion 306. The PTS 308 may modify the Bluetooth transmission priority level via the control and/or data signals 310b based, at least in part, on WLAN transmission priority level information received by the PTS 308 from the WLAN radio portion 304. Additional non-real time status information may be entered to the PTS 308. This information may comprise, but need not be limited to, current WLAN channel, current WLAN operation mode, such as best effort traffic or QoS, Bluetooth operation mode, such as idle, SCO, eSCO, ACL, page, master/slave, and/or Bluetooth AFH hop set, for example.

In accordance with various embodiments of the invention, various portions of the operations supported by the WLAN radio portion 304 and various portions of the operations supported by the Bluetooth radio portion 306 may be performed by common logic, circuitry, and/or code. Exemplary common logic, circuitry, and/or code may comprise front-end radio receivers, packet processing blocks, packet scheduling blocks, and/or priority level processing, for example. This approach may be utilized to, for example, reduce power consumption and/or reduce the die size of the single chip WLAN/BT radio device 300.

The PTS 308 may comprise suitable logic, circuitry, and/or code that may be adapted to schedule WLAN transmissions and/or Bluetooth transmissions based on WLAN transmission priority level information, Bluetooth transmission priority level information, future WLAN transmission requirements, and/or future Bluetooth transmission requirements. In this regard, the PTS 308 need not be limited to per-packet arbitration and/or authorization of current WLAN or Bluetooth transmission needs. The PTS 308 may be adapted to generate signals that may modify the Bluetooth transmission priority level in the Bluetooth radio portion 306 and/or modify the WLAN transmission priority level in the WLAN radio portion 304. The PTS 308 may be implemented separately from the WLAN radio portion 304 or the Bluetooth radio portion 306 as shown in FIG. 3. In other implementations, at least portions of the PTS 308 may be implemented in the WLAN radio portion 304 and/or the Bluetooth radio portion 306.

The global clock 302 may comprise suitable logic, circuitry, and/or code that may be adapted to generate a single clock source for the WLAN radio portion 304, the Bluetooth radio portion 306, and/or the PTS 308. The use of the global clock 302 may allow the PTS 308 to coordinate, schedule, and/or synchronize current and/or future WLAN and Bluetooth transmissions with improved timing accuracy than if separate clocks were utilized for WLAN and Bluetooth transmissions. The global clock 302 may be based on the Bluetooth clock, for example.

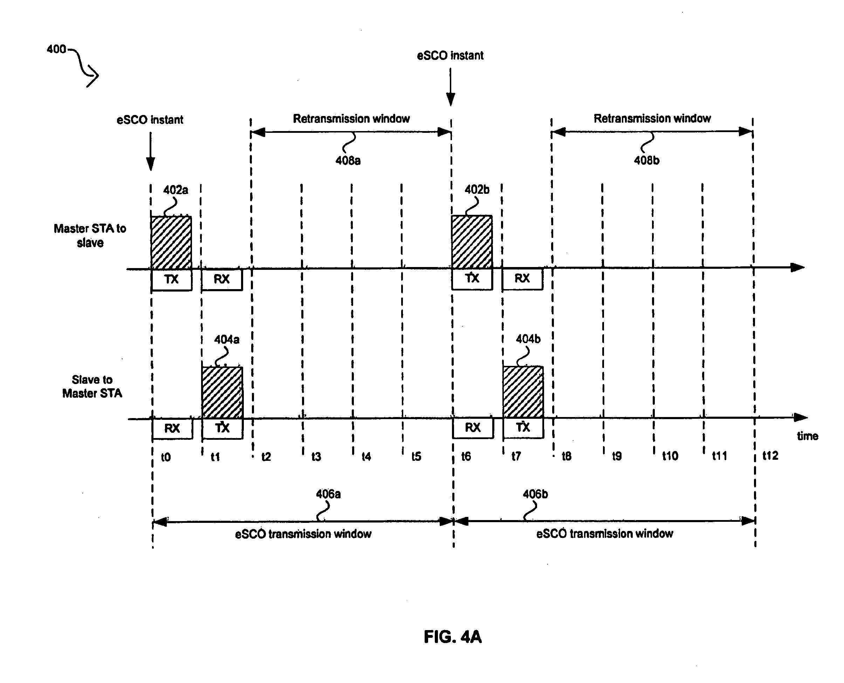

FIG. 4A is a timing diagram that illustrates an exemplary retransmission scheduling of EV3 Bluetooth eSCO packets for a VoWLAN and Bluetooth usage model, in accordance with an embodiment of the invention. Referring to FIG. 4A, there is shown a Bluetooth transmission diagram 400 that corresponds to an instance when Bluetooth radio and WLAN radio supporting voice-over-WLAN (VoWLAN) communication are operating collaboratively and are collocated in a single WLAN/BT chip radio device in a mobile device, such as a mobile phone, for example. This usage model may be implemented when, for example, a Bluetooth-enabled headset communicates with the mobile device via the Bluetooth protocol and the mobile device simultaneously communicates with an access point via the WLAN protocol.

The Bluetooth communication may occur via an extended synchronous connection-oriented (eSCO) logical transport, for example. The eSCO logical transport is a symmetric or asymmetric, point-to-point link between the master and a specific slave. The eSCO reserves slots on the physical channel and may therefore be considered as a circuit-switched connection between the master and the slave. The eSCO links may offer a number of extensions over the standard SCO links, in that they support a more flexible combination of packet types and selectable data contents in the packets and selectable slot periods, allowing a range of synchronous bit rates to be supported. An eSCO links may also offer limited retransmission of packets, unlike SCO links where there is no retransmission. If retransmissions are required, they may take place in the slots that follow the reserved slots, otherwise the slots may be used for other traffic, for example.

An eSCO packet may comprise a cyclic redundancy check (CRC) code and retransmission may be applied when no acknowledgement of proper reception is received in the reserved timeslot. The eSCO packet may be utilized for 64kb/s audio transmission, transparent data transmission at 64kbs/s, and/or for other transmission rates, for example. The Bluetooth protocol specifies an EV3 packet as one implementation of an eSCO packet that may comprise between 1 and 30 information bytes and a 16-bit CRC code.

The packets 402a and 402b, in time slots t0 and t6 in FIG. 4A respectively, may be EV3 packets transmitted from a master station (STA) to a slave device. In this exemplary usage model, the master station may correspond to the mobile device and the slave device may correspond to the Bluetooth-enabled headset, for example. Similarly, packets 404a and 404b, in time slots t1 and t7 respectively, may be EV3 packets transmitted from the slave device to the master station. The eSCO transmission windows 406a and 406b may correspond to intervals of time for the transmission of eSCO packets such as EV3 packets, for example. The time interval of the eSCO transmission window 406a comprises time slots t0 through t5. The time interval of the eSCO transmission window 406b comprises time slots t6 and through t11.

The retransmission windows 408a and 408b may correspond to intervals of time that may be utilized when the intended communication did not occur correctly in the reserved timeslots. For example, during the retransmission window 408a an acknowledgment of receipt of packet 402a by the Bluetooth-enabled headset may be received at the mobile device. Similarly, during the retransmission window 408b an acknowledgment of receipt of packet 402b by the Bluetooth-enabled headset may be received at the mobile device. The time interval of the retransmission window 408a comprises time slots t2 through t5 while the time interval of the retransmission window 408b comprises time slots t8 and through t11, for example.

When an eSCO packet transmission may not occur in the reserved eSCO time slots, such as time slot t0 for the master STA without causing a collision with the TXPO interval, the PTS 308 in FIG. 3 may reschedule transmission of the eSCO packet within the retransmission window 408a, for example. The VoWLAN communication in this exemplary usage model may support quality-of-service (QoS) features such as transmission opportunities (TXOPs) that provide an interval of time during which a WLAN station may transmit a WLAN packet. The WLAN protocol may also support QoS in AV, video, and VolP applications, for example. In this regard, the PTS 308 may utilize Bluetooth retransmission information and/or the WLAN TXOP information to synchronize and/or schedule an eSCO packet retransmission when necessary. The PTS 308 may be adapted to determine the retransmission schedule based on current priority levels for WLAN and Bluetooth transmission.

Referring to FIG. 4A, during the eSCO transmission window 406a, when the slave device does not acknowledge reception of the packet 402a during the retransmission window 406a, the PTS 308 may schedule retransmission of the packet 402a in a subsequent eSCO transmission window such as the eSCO transmission window 406b. In this regard, the time interval of the eSCO transmission window 406b may be determined based on the WLAN transmission opportunities. Moreover, the PTS 308 may coordinate the eSCO transmission window 406b and the transmission opportunities based on the global clock 302. During the eSCO transmission window 406b, the packet 402a may be retransmitted to the slave device as the packet 402b, for example.

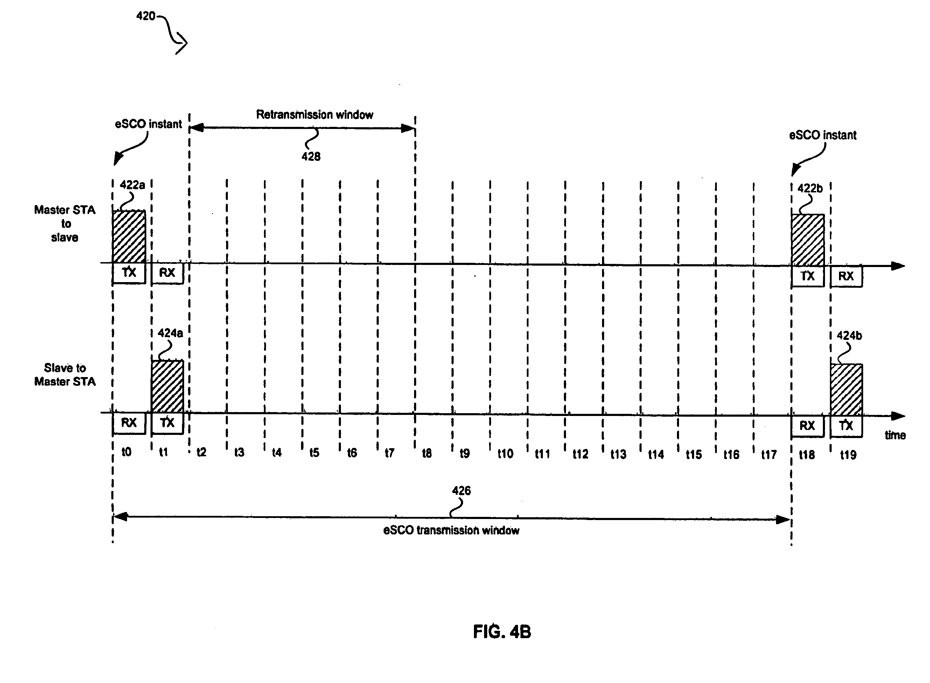

FIG. 4B is a timing diagram that illustrates an exemplary retransmission scheduling of 3-EV3 Bluetooth eSCO packets for a VoWLAN and Bluetooth usage model, in accordance with an embodiment of the invention. Referring to FIG. 4B, there is shown a Bluetooth transmission diagram 420 that corresponds to an instance when Bluetooth radio and WLAN radio supporting VoWLAN communication are operating collaboratively and are collocated in a single WLAN/BT chip radio device in a mobile device, such as a mobile phone, for example. The Bluetooth communication may occur via an eSCO logical transport utilizing 3EV3 packets, for example. The 3-EV3 packet may be similar to the EV3 packet except that the payload is modulated using 8DPSK. The 3-EV3 packet type may be used for supporting 64 kbps BT voice traffic, similar to the EV3 and HV3 packet types. The 3-EV3 packet type may have between 1 and 90 information bytes plus a 16-bit CRC code. The bytes may not be protected by FEC. A 3-EV3 packet may cover up to a single time slot. There is no payload header present in a 3-EV3 packet.

The packets 422a and 422b, in time slots t0 and t18 in FIG. 4B respectively, may be 3-EV3 packets transmitted from a master station (STA) to a slave device. Similarly, packets 424a and 424b, in time slots t1 and t19 respectively, may be 3-EV3 packets transmitted from the slave device to the master station. The eSCO transmission window 426 may correspond to a time interval for the transmission of eSCO packets such as 3-EV3 packets, for example. The time interval of the eSCO transmission window 426 comprises time slots t0 through t17. The retransmission windows 428 may correspond to a time interval that may be utilized when the intended communication did not occur correctly in the reserved timeslots. For example, during the retransmission window 428 an acknowledgment of receipt of packet 422a by the Bluetooth-enabled headset may be received at the mobile device. The time interval of the retransmission window 428 comprises time slots t2 through t8. In this regard, the retransmission window 428 may be configured to be longer or shorter than the exemplary embodiment described in FIG. 4B

When an eSCO packet transmission may not occur in the reserved eSCO time slots, such as time slot t0 for the master STA without causing a collision with the TXPO interval, the PTS 308 in FIG. 3 may reschedule transmission of the eSCO packet within the retransmission window 428, for example. In this regard, the PTS 308 may utilize Bluetooth retransmission information and/or the WLAN TXOP information to synchronize and/or schedule an eSCO packet retransmission when necessary. The PTS 308 may enable determining the retransmission schedule based on current priority levels for WLAN and Bluetooth transmission.

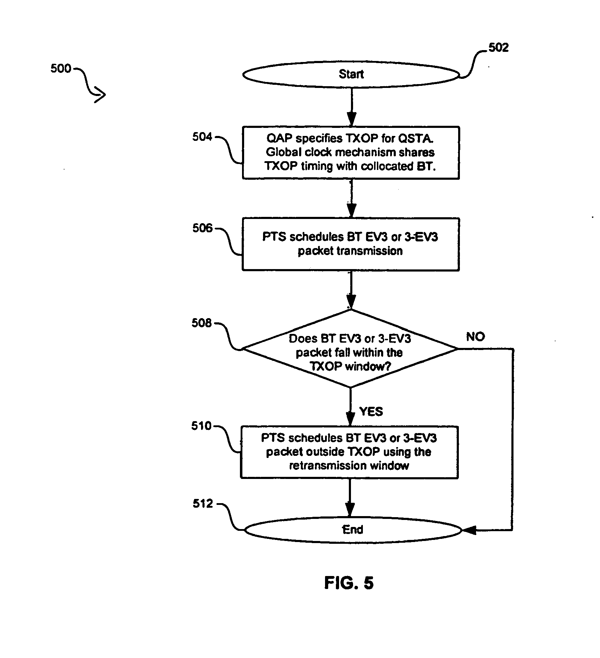

FIG. 5 is a flow diagram that illustrates exemplary steps in the retransmission scheduling of Bluetooth eSCO packets, in accordance with an embodiment of the invention. Referring to FIG. 5, there is shown a flow diagram 500. After start step 502, in step 504, an access point providing QoS (QAP) in the WLAN may specify the TXOPs for the VoWLAN communication that may be supported by a mobile station that also provides QoS (QSTA). A global clock mechanism, such as that provided by the global clock 302, may be utilized to share the TXOP timing with a collocated Bluetooth radio in the QSTA. In this regard, the TXOP may be defined by a start time and a maximum duration, for example. For a typical contention-based channel access scheme, the TOXP may be referred to as an enhanced distributed channel access (EDCA) TXOP, for example. In step 506, the PTS 308 may receive information regarding the TXOPs and may schedule BT eV3 or 3-EV3 packet transmissions.

The PTS 308 may be adapted to coordinate the transmission of WLAN packets during WLAN TXOPs and EV3 or 3-EV3 packets during eSCO transmission windows by utilizing timing information provided by the global clock 302. In this regard, the PTS 308 may consider the QoS requirements for both VoWLAN and Bluetooth eSCO communications. In step 508, when the BT EV3 or 3-EV3 packet falls within the TXOP window, the process may proceed to step 510. In step 510, the PTS 308 schedule the BT EV3 or 3-EV3 packet transmission outside the TXOP window using a retransmission window. Subsequent to step 510, the process may proceed to end step 512. Returning to step 508, when the BT EV3 or 3-EV3 packet does not fall within the TXOP window, the process may proceed to end step 512. Following similar steps as those described in FIG. 5, Bluetooth traffic may also be scheduled outside of a WLAN beacon arrival window, for example.

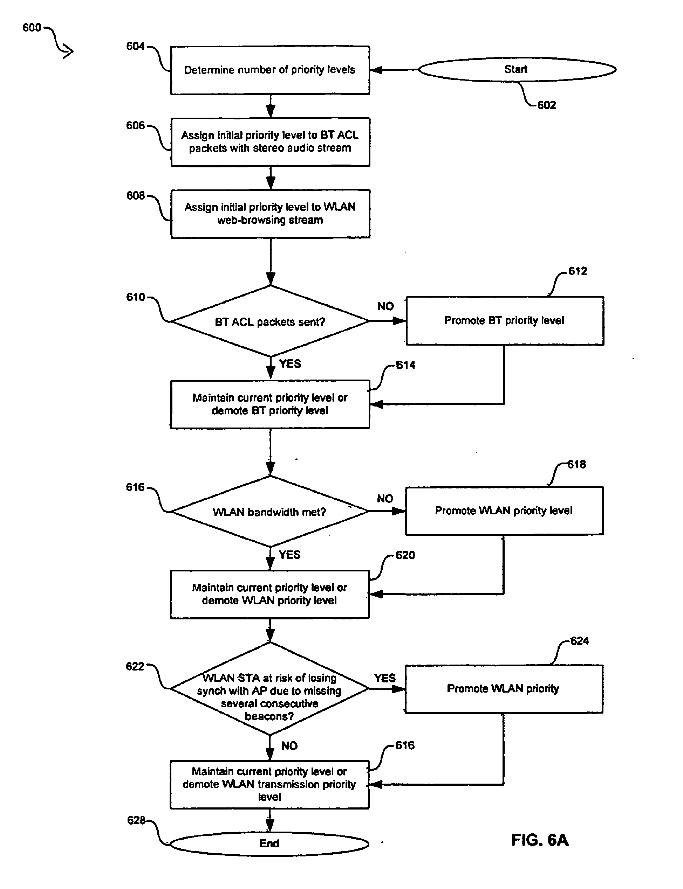

FIG. 6A is a flow diagram that illustrates exemplary steps in the scheduling of Bluetooth ACL packets and a WLAN web-browsing stream, in accordance with an embodiment of the invention. Referring to FIG. 6A, there is shown a flow diagram 600 that may correspond to a usage model wherein a mobile device utilizes a single chip WLAN/BT radio device that supports Bluetooth sub-band coded (SBC) stereo music on ACL packets and WLAN web-browsing operations. In this regard, the ACL link may be utilized for carrying Bluetooth A2DP traffic, such as high fidelity stereo audio using the SBC codec, for example. This usage model may be utilized when, for example, a user is listening to music via a Bluetooth-enabled headset while a small bandwidth may be guaranteed for simultaneous web-browsing activities.

Subsequent to start step 602, in step 604, the number of transmission priority levels for Bluetooth and WLAN collaborative and collocated operation may be determined. The transmission priority levels may be utilized by the PTS 308 to schedule Bluetooth and WLAN traffic. In an exemplary embodiment of the invention, a four level transmission priority comprising LEVEL 0, LEVEL 1, LEVEL 2, and LEVEL 3 may be implemented where the LEVEL 0 corresponds to the highest transmission priority and LEVEL 3 corresponds to the lowest transmission priority. In this regard, the PTS 308 may give deference or transmission priority to a signal with a higher priority level over a signal with a lower priority level. The transmission priority levels for WLAN and Bluetooth communication may be implemented separately.

In step 606, an initial transmission priority level may be assigned to the Bluetooth ACL packets with stereo content. For ACL packets supporting high quality stereo music at 345 kb/s, the initial transmission priority level may be set to LEVEL 2 for a first transmission attempt, for example. In step 608, an initial transmission priority level may be assigned to the WLAN packets. For WLAN traffic that may not need to guarantee a minimum bandwidth, the initial transmission priority level may be set to LEVEL 3, for example. In other instances, when the WLAN traffic may require a minimum bandwidth to guarantee receiving beacons from an access point to maintain the association with the access point, an initial transmission priority level for WLAN traffic may be set to LEVEL 2, for example.

In step 610, when a Bluetooth ACL packet is not sent, for example, because of transmission deference to WLAN traffic by the PTS 308, the process may proceed to step 612. In step 612, the PTS 308 may determine that Bluetooth ACL packets need to have a higher priority level to avoid the loss of QoS on the stereo stream. In this regard, the PTS 308 may promote the retransmission of a Bluetooth ACL packet from LEVEL 2 to a higher transmission priority level such as LEVEL 1, for example. When additional ACL packet retransmission attempts may be required, a priority promotion from LEVEL 1 to LEVEL 0, for example, may be necessary. After step 612, the process may proceed to step 614.

Returning to step 610, when a Bluetooth ACL packet has been successfully transmitted the process may proceed to step 614. In step 614, the priority level for Bluetooth traffic may be maintained at the current level or may be demoted to a lower priority level to prevent Bluetooth transmissions to enable listening for beacons without collocated interference. For example, if to transmit a prior ACL packet the transmission priority level was promoted from LEVEL 2 to LEVEL 0, the PTS 308 may maintain LEVEL 0 priority for subsequent ACL packets or may determine that the transmission priority level may be demoted from LEVEL 0 to LEVEL 1 or to LEVEL 2, for example, in order to accommodate WLAN bandwidth requirements. After step 614, the process may proceed to step 616.

In step 616, when the minimum required WLAN bandwidth for web-browsing is not achieved, the process may proceed to step 618. In step 618, the PTS 308 may determine that WLAN traffic needs to have a higher transmission priority level to achieve and/or maintain the necessary bandwidth. In this regard, the PTS 308 may promote the transmission of WLAN packets from the initial transmission priority level LEVEL 2 to a higher transmission priority level such as LEVEL 1, for example. Additional priority promotions, to LEVEL 1 or to LEVEL 0, for example, may be necessary in order to achieve the necessary bandwidth. After step 618, the process may proceed to step 620.

Returning to step 616, when the minimum WLAN bandwidth has been successfully achieved, the process may proceed to step 620. In step 620, the priority level for WLAN traffic may be maintained at the current level or may be demoted to a lower priority level to enable listening for signals without collocated interference. For example, if in order to achieve the necessary WLAN bandwidth the transmission priority level was promoted from LEVEL 2 to LEVEL 0, the PTS 308 may maintain LEVEL 0 priority for subsequent WLAN transmission or may determine that the transmission priority level may be demoted from LEVEL 0 to LEVEL 1 or to LEVEL 2, for example, in order to accommodate Bluetooth traffic requirements. After step 620, the process may proceed to step 622.

In step 622, when the mobile device is not able to demodulate a predetermined number of consecutive beacon signals from the WLAN access point and may be at risk of losing synchronization with the WLAN access point, the process may proceed to step 624. In step 624, the PTS 308 may determine that WLAN traffic needs to have a higher transmission priority level to maintain synchronization with the WLAN access point. In this regard, the PTS 308 may promote the transmission of WLAN packets from a current transmission priority level, such as LEVEL 2, for example, to a higher transmission priority level such as LEVEL 1, for example. Additional priority promotions, to LEVEL 0, for example, may be necessary in order to maintain synchronization with the WLAN access point. After step 624, the process may proceed to step 626.

Returning to step 622, when the mobile device is able to maintain synchronization with the WLAN access point given the current transmission priority level, the process may proceed to step 626. In step 626, the transmission priority level for WLAN traffic may be maintained at the current level or may be demoted to a lower transmission priority level. For example, if in order to achieve synchronization with the WLAN access point the transmission priority level was promoted from LEVEL 2 to LEVEL 0, the PTS 308 may maintain LEVEL 0 priority for subsequent WLAN transmission or may determine that the transmission priority level may be demoted from LEVEL 0 to LEVEL 1 or to LEVEL 2, for example, in order to accommodate Bluetooth traffic requirements. After step 626, the process may proceed to end step 628.

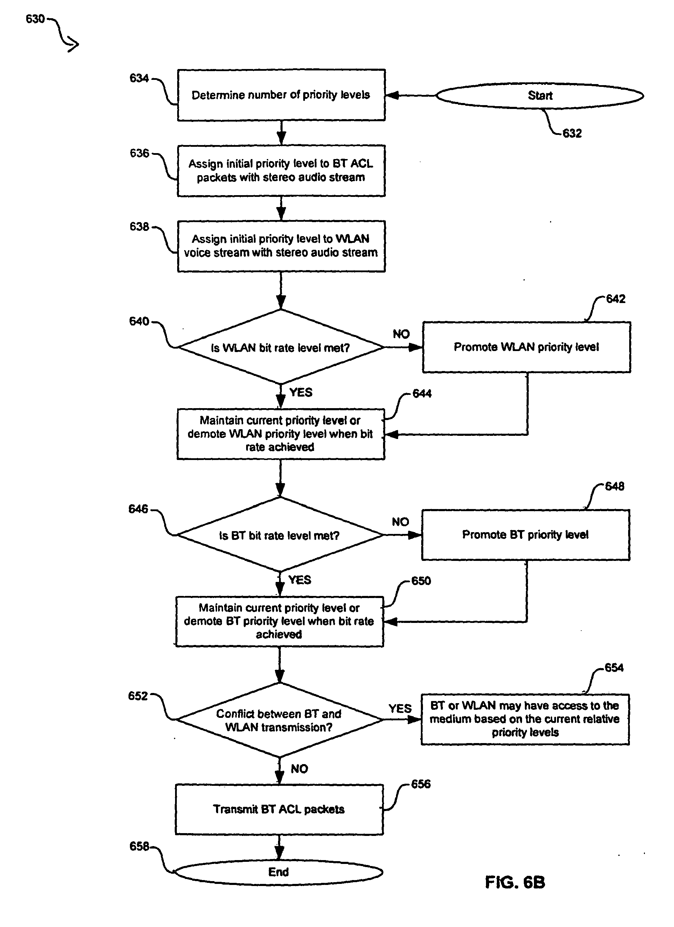

FIG. 6B is a flow diagram that illustrates exemplary steps in the scheduling of Bluetooth ACL and a WLAN stereo audio stream, in accordance with an embodiment of the invention. Referring to FIG. 6B, there is shown a flow diagram 630 that may correspond to a usage model wherein a mobile device utilizes a single chip WLAN/BT radio device that supports Bluetooth ACL packet traffic and VoWLAN activities. After start step 632, in step 634, the number of transmission priority levels for Bluetooth and WLAN collaborative and collocated operation may be determined. The transmission priority levels may be utilized by the PTS 308 to schedule Bluetooth and WLAN traffic. In an exemplary embodiment of the invention, a four level transmission priority comprising LEVEL 0, LEVEL 1, LEVEL 2, and LEVEL 3 may be implemented where the LEVEL 0 corresponds to the highest transmission priority and LEVEL 3 corresponds to the lowest transmission priority. In this regard, the PTS 308 may give deference or transmission priority to a signal with a higher priority level over a signal with a lower priority level. The transmission priority levels for WLAN and Bluetooth communication may be implemented separately.

In step 636, an initial transmission priority level may be assigned to the Bluetooth packets. The initial transmission priority level may be set to LEVEL 1 for a transmission attempt, for example. In step 638, an initial transmission priority level may be assigned to the WLAN packets. For example, for VoWLAN to have adequate end-to-end link quality, a 90 kb/s voice CODEC compression may be necessary. Bit rates that fall below this threshold may affect the end-to-end VolP quality as a result of larger than accepted delays in the WLAN portion of the link, for example. The initial transmission priority level for VoWLAN may be set to LEVEL 2, for example.

In step 640, when the threshold WLAN bit-rate is not achieved, the process may proceed to step 642. In step 642, the PTS 308 may determine that WLAN traffic needs to have a higher priority level to achieve and/or maintain the necessary bit-rate. In this regard, the PTS 308 may promote the priority level of WLAN packets from the initial priority level LEVEL 2 to a higher priority level such as LEVEL 1, for example. Additional priority promotions, to LEVEL 0, for example, may be necessary in order to achieve the necessary bandwidth. For example, when falling into a low modulation rate as a result of exponential delays in WLAN retransmissions, priority promotion to LEVEL 0 may be necessary. After step 642, the process may proceed to step 644.

Returning to step 640, when the threshold WLAN bit-rate is met, the process may proceed to step 644. In step 644, the priority level for WLAN traffic may be maintained at the current level or may be demoted to a lower priority level. In an exemplary embodiment of the invention, if in order to achieve the necessary WLAN bit-rate the priority level was promoted from LEVEL 2 to LEVEL 0, the PTS 308 may maintain LEVEL 0 priority for subsequent WLAN communication or may determine that the priority level may be demoted from LEVEL 0 to LEVEL 1 or to LEVEL 2, for example, in order to accommodate Bluetooth traffic requirements. After step 644, the process may proceed to step 646.

In step 646, when the threshold Bluetooth bit-rate is not achieved, the process may proceed to step 648. In step 648, the PTS 308 may determine that Bluetooth traffic needs to have a higher priority level to achieve and/or maintain the necessary bit-rate. In this regard, the PTS 308 may promote the priority level of Bluetooth packets from the initial priority level LEVEL 1 to a higher priority level such as LEVEL 0, for example. After step 648, the process may proceed to step 650.

Returning to step 646, when the threshold Bluetooth bit-rate is met, the process may proceed to step 650. In step 650, the priority level for Bluetooth traffic may be maintained at the current level or may be demoted to a lower priority level. In an exemplary embodiment of the invention, if in order to achieve the necessary Bluetooth bit-rate the priority level was promoted from LEVEL 1 to LEVEL 0, the PTS 308 may maintain LEVEL 0 priority for subsequent Bluetooth communication or may determine that the priority level may be demoted from LEVEL 0 to LEVEL 1 or to LEVEL 2, for example, in order to accommodate WLAN traffic requirements. After step 650, the process may proceed to step 652.

In step 652, when VoWLAN is promoted to a higher transmission priority level such as LEVEL 1, for example, which may conflict with the Bluetooth packet transmission priority level. In this regard, when a transmission conflict occurs between VoWLAN and the Bluetooth link, the process may proceed to step 654. In step 654, the Bluetooth or WLAN may have access to the medium based on the current relative priorities. While the Bluetooth packet may not be transmitted, a Bluetooth-enable headset may utilize error concealment algorithms, for example, to feed samples to the headset speakers that are benign to the listener. These samples may be, for example, silence samples, attenuated versions of previous audio payload, and/or some form of comfort noise. Returning to step 652, when a transmission conflict does not occur between VoWLAN and the Bluetooth link, the process may proceed to step 656. In step 656, the Bluetooth ACL packets may be transmitted in accordance with the PTS 308.

In another embodiment of the invention, the PTS 308 may be utilized to coordinate, schedule, and/or arrange transmission and/or reception of Bluetooth and WLAN signals when a single antenna is being utilized with the single chip WLAN/BT radio device. In this regard, multiple priority levels may also be utilized for determining transmission and reception priorities for Bluetooth and WLAN communications.

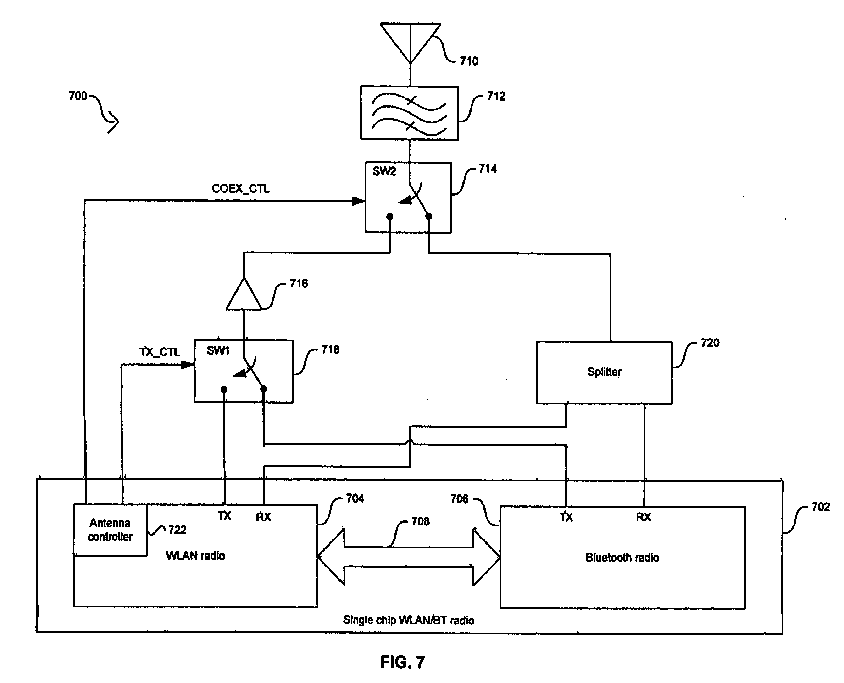

FIG. 7 is a block diagram illustrating an exemplary usage model for the single IC that supports WLAN and Bluetooth radio operations with one antenna, in accordance with an embodiment of the invention. Referring to FIG. 7, the WLAN/Bluetooth collaborative radio architecture 700 may comprise a single antenna 710, a bandpass filter 712, a first antenna switch (SW1) 718, a second antenna switch (SW2) 714, a power amplifier (PA) 716, a splitter 720, and a single chip WLAN/Bluetooth (WLAN/BT) radio device 702. The single chip WLAN/BT radio device 702 may comprise a WLAN radio portion 704 and a Bluetooth radio portion 706. The WLAN radio portion 704 may comprise an antenna controller 722.

The single antenna 710 may comprise suitable logic, circuitry, and/or code that may be adapted to provide transmission and reception of Bluetooth and WLAN communication. In this regard, the single antenna 710 may be utilized for transmission and reception of a plurality of communication protocols. The bandpass filter 712 may comprise suitable hardware, logic, and/or circuitry that may be adapted to perform bandpass filtering on communication signals. The bandpass filter 712 may be implemented by utilizing a polyphase filter, for example. The bandpass filter 712 may be configured to conform to the bandpass requirements for the ISM band.

The SW1 718 and the SW2 714 may comprise suitable logic, circuitry, and/or code that may be adapted to select from signals at two input ports one that may be connected to an output port. The SW1 718 and SW2 714 may be implemented by utilizing, for example, single pull double throw (SPDT) switching devices. The selection operation of the SW1 718 may be controlled by a control signal such as a WLAN transmission control (TX_CTL) signal generated by the antenna controller 722. The selection operation of the SW2 714 may be controlled by a control signal such as the coexistence control (COEX_CTL) signal generated by the antenna controller 722.

The WLAN radio portion 704 in the single chip WLAN/BT radio device 702 may comprise suitable logic, circuitry, and/or code that may be adapted to process WLAN protocol packets for communication. The antenna controller 722 in the WLAN radio portion 704 may comprise suitable logic, circuitry, and/or code that may be adapted to generate at least the TX_CTL and/or COEX_CTL control signals for configuring the station to receive and/or transmit WLAN and/or Bluetooth data. As shown, the WLAN radio portion 704 may comprise separate ports for transmission (Tx) and reception (Rx) of WLAN packet traffic. However, a single TX/RX port may also be utilized for WLAN communication. The WLAN radio portion 704 may be adapted to generate and/or receive at least one priority signal 708 for controlling and/or scheduling collaborative communication with the Bluetooth radio portion 706.

The Bluetooth radio portion 706 may comprise suitable logic, circuitry, and/or code that may be adapted to process Bluetooth protocol packets for communication. As shown, the Bluetooth radio portion 706 may comprise separate ports for transmission (Tx) and reception (Rx) of Bluetooth packet traffic. However, a single TX/RX port may also be utilized for Bluetooth communication. The Bluetooth radio portion 706 may be adapted to generate and/or receive at least one priority signal 708 for controlling and/or scheduling collaborative communication with the WLAN radio portion 704.

In some instances, either WLAN communication or Bluetooth communication may be disabled and the station may not operate in a coexistence mode. When the WLAN communication is disabled, the SW1 718 and/or the SW2 714 may utilize a default configuration to support Bluetooth communication. When the Bluetooth communication is disabled, the SW1 718 and/or the SW2 714 may utilize a default configuration to support WLAN communication.

The splitter 720 may comprise suitable hardware, logic, and/or circuitry that may be adapted to split a received communication data into a BT received data and a WLAN received data. The splitter 720 may be utilized to support separate Bluetooth reception and transmission paths and to reduce the need to arbitrate or schedule simultaneous Bluetooth and WLAN receptions. In some instances, another switch may be utilized to bypass the splitter 720 and reduce the implementation loss when operating in a WLAN-only or Bluetooth-only mode. The PA 716 may comprise suitable logic, circuitry, and/or code that may be adapted to amplify Bluetooth and/or WLAN transmission signals. The PA 716 may provide, for example, a 20 dB gain and may be implemented on-chip or off-chip. In this regard, the PA 716 may be utilized to provide class 1 operations for Bluetooth transmissions.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for providing wireless communication, the method comprising scheduling Wireless Local Area Network, abbreviated WLAN, communication and Bluetooth, abbreviated BT, communication in a single radio chip that handles at least a Bluetooth communication protocol and a WLAN communication protocol based on priority levels assigned to said WLAN communication and Bluetooth communication,
wherein scheduling WLAN communication and Bluetooth communication comprises the step of coordinating a transmission of WLAN packets during WLAN transmission opportunities and a transmission of extended synchronous connection orientated, abbreviated eSCO, packets during eSCO transmission windows by utilizing timing information provided by a global clock (302) used by a WLAN radio part and a Bluetooth radio part of the single radio chip,
**characterized in that** the step of coordinating the transmission of WLAN packets and eSCO packets comprises:
utilizing Bluetooth retransmission information and WLAN transmission opportunity information to schedule a retransmission of an eSCO packet when necessary;
scheduling (506) transmission of an eSCO packet; and
scheduling (508, 510) retransmission of the eSCO packet outside the WLAN transmission opportunity window using a retransmission window if the eSCO packet falls within the WLAN transmission opportunity window.

2. The method according to claim 1, further comprising promoting (618) said priority level assigned to said WLAN communication.

3. The method according to claim 1, further comprising demoting (620) said priority level assigned to said WLAN communication.

4. The method according to claim 1, further comprising promoting (612) said priority level assigned to said Bluetooth communication.

5. The method according to claim 1, further comprising demoting (614) said priority level assigned to said Bluetooth communication.

6. A machine-readable storage having stored thereon, a computer program having at least one code section for providing wireless communication, the at least one code section being executable by a machine for causing the machine to perform steps comprising scheduling Wireless Local Area Network, abbreviated WLAN, communication and Bluetooth, abbreviated BT, communication in a single radio chip that handles at least a Bluetooth communication protocol and a WLAN communication protocol based on priority levels assigned to said WLAN communication and Bluetooth communication,
wherein scheduling WLAN communication and Bluetooth communication comprises the step of coordinating a transmission of WLAN packets during WLAN transmission opportunities and a transmission of extended synchronous connection orientated, abbreviated eSCO, packets during eSCO transmission windows by utilizing timing information provided by a global clock (302) used by a WLAN radio part and a Bluetooth radio part of the single radio chip,
**characterized in that** the step of coordinating the transmission of WLAN packets and eSCO packets comprises:
utilizing Bluetooth retransmission information and WLAN transmission opportunity information to schedule a retransmission of an eSCO packet when necessary;
scheduling (506) transmission of an eSCO packet; and
scheduling (508, 510) retransmission of the eSCO packet outside the WLAN transmission opportunity window using a retransmission window if the eSCO packet falls within the WLAN transmission opportunity window.

7. The machine-readable storage according to claim 6, further comprising code for promoting said priority level assigned to said WLAN communication.

8. A system for providing wireless communication, the system comprising:
a single radio chip comprising a scheduler (308);
said single radio chip is adapted to handle at least a Bluetooth, abbreviated BT, communication protocol and a Wireless Local Area Network, abbreviated WLAN, communication protocol based on priority levels assigned to WLAN communication and Bluetooth communication; and
said scheduler (308) is adapted to schedule said WLAN communication and Bluetooth communication, wherein
said scheduler (308) is further adapted to coordinate a transmission of WLAN packets during WLAN transmission opportunities and a transmission of extended synchronous connection orientated, abbreviated eSCO, packets during eSCO transmission windows by utilizing timing information provided by a global clock (302) used by a WLAN radio part and a Bluetooth radio part of the single radio chip,
**characterized in that**
said scheduler (308) is adapted to utilize Bluetooth retransmission information and WLAN transmission opportunity information to schedule a retransmission of an eSCO packet when necessary; wherein said scheduler (308) is adapted to schedule transmission of an eSCO packet, and, if the eSCO packet falls within the WLAN transmission opportunity window, to schedule retransmission of the eSCO packet outside the WLAN transmission opportunity window using a retransmission window.

9. The system according to claim 8, wherein said scheduler (308) is adapted to schedule WLAN transmissions and/or Bluetooth transmissions further based on future WLAN transmission requirements, and/or future Bluetooth transmission requirements.

10. The system according to claim 8, wherein said single radio chip (204) is adapted to demote said priority level assigned to said WLAN communication.

## Patentansprüche

1. Verfahren zum Bereitstellen einer drahtlosen Datenübertragung, wobei das Verfahren ein Scheduling (Zeitablaufplanung) einer Wireless-Local-Area-Network-, abgekürzt WLAN (drahtloses lokales Netzwerk), Datenübertragung und einer Bluetooth-, abgekürzt BT, Datenübertragung in einem einzelnen Funkchip umfasst, der basierend auf der WLAN-Datenübertragung und Bluetooth-Datenübertragung zugewiesenen Prioritätsebenen wenigstens ein Bluetooth-Datenübertragungsprotokoll und ein WLAN-Datenübertragungsprotokoll handhabt,
- wobei das Scheduling der WLAN-Datenübertragung und Bluetooth-Datenübertragung den Schritt des Koordinierens einer Übertragung von WLAN-Paketen während WLAN-Übertragungsgelegenheiten und einer Übertragung erweiterter synchroner verbindungsorientierter, abgekürzt eSCO (extended synchronous connection oriented), Pakete während eSCO-Übertragungsfenstern unter Nutzung von Zeitablaufinformationen umfasst, die durch einen globalen Zeitgeber (302) bereitgestellt werden, der von einem WLAN-Funkabschnitt und einem Bluetooth-Funkabschnitt des einzelnen Funkchips verwendet wird,
**dadurch gekennzeichnet, dass** der Schritt des Koordinierens der Übertragung von WLAN-Paketen und eSCO-Paketen umfasst:
- Nutzen, bei Bedarf, von Bluetooth-Neuübertragungsinformationen und WLAN-Übertragungsgelegenheitsinformationen zum Schedulen einer erneuten Übertragung eines eSCO-Pakets,
- Schedulen (506) der Übertragung eines eSCO-Pakets, und
- Schedulen (508, 510) einer erneuten Übertragung des eSCO-Pakets außerhalb des WLAN-Übertragungsgelegenheitsfensters unter Verwendung eines Neuübertragungsfensters, wenn das eSCO-Paket in das WLAN-Übertragungsgelegenheitsfenster fällt.

2. Verfahren nach Anspruch 1,
das ferner das Hochstufen (618) der der WLAN-Datenübertragung zugewiesenen Prioritätsebene umfasst.

3. Verfahren nach Anspruch 1,
das ferner das Zurückstufen (620) der der WLAN-Datenübertragung zugewiesenen Prioritätsebene umfasst.

4. Verfahren nach Anspruch 1,
das ferner das Hochstufen (612) der der Bluetooth-Datenübertragung zugewiesenen Prioritätsebene umfasst.

5. Verfahren nach Anspruch 1,
das ferner das Zurückstufen (614) der der Bluetooth-Datenübertragung zugewiesenen Prioritätsebene umfasst.

6. Maschinenlesbarer Speicher, in dem ein Computerprogramm mit wenigstens einem Codeabschnitt zum Bereitstellen einer drahtlosen Datenübertragung gespeichert ist, wobei der wenigstens eine Codeabschnitt durch eine Maschine ausführbar ist, um zu bewirken, dass die Maschine Schritte durchführt, die ein Scheduling (Zeitablaufplanung) einer Wireless-Local-Area-Network-, abgekürzt WLAN (drahtloses lokales Netzwerk), Datenübertragung und einer Bluetooth-, abgekürzt BT, Datenübertragung in einem einzelnen Funkchip umfassen, der basierend auf der WLAN-Datenübertragung und Bluetooth-Datenübertragung zugewiesenen Prioritätsebenen wenigstens ein Bluetooth-Datenübertragungsprotokoll und ein WLAN-Datenübertragungsprotokoll handhabt,
- wobei das Scheduling der WLAN-Datenübertragung und Bluetooth-Datenübertragung den Schritt des Koordinierens einer Übertragung von WLAN-Paketen während WLAN-Übertragungsgelegenheiten und einer Übertragung erweiterter synchroner verbindungsorientierter, abgekürzt eSCO (extended synchronous connection oriented), Pakete während eSCO-Übertragungsfenstern unter Nutzung von Zeitablaufinformationen umfasst, die durch einen globalen Zeitgeber (302) bereitgestellt werden, der von einem WLAN-Funkabschnitt und einem Bluetooth-Funkabschnitt des einzelnen Funkchips verwendet wird,
**dadurch gekennzeichnet, dass** der Schritt des Koordinierens der Übertragung von WLAN-Paketen und eSCO-Paketen umfasst:
- Nutzen, bei Bedarf, von Bluetooth-Neuübertragungsinformationen und WLAN-Übertragungsgelegenheitsinformationen zum Schedulen einer erneuten Übertragung eines eSCO-Pakets,
- Schedulen (506) der Übertragung eines eSCO-Pakets, und
- Schedulen (508, 510) einer erneuten Übertragung des eSCO-Pakets außerhalb des WLAN-Übertragungsgelegenheitsfensters unter Verwendung eines Neuübertragungsfensters, wenn das eSCO-Paket in das WLAN-Übertragungsgelegenheitsfenster fällt.

7. Maschinenlesbarer Speicher nach Anspruch 6,
der ferner einen Code zum Hochstufen der der WLAN-Datenübertragung zugewiesenen Prioritätsebene umfasst.

8. System zum Bereitstellen einer drahtlosen Datenübertragung, wobei das System umfasst:
- einen einzelnen Funkchip mit einem Scheduler (Zeitablaufplaner) (308),
- wobei der einzelne Funkchip dafür ausgelegt ist, basierend auf der WLAN-Datenübertragung und Bluetooth-Datenübertragung zugewiesenen Prioritätsebenen wenigstens ein Bluetooth-, abgekürzt BT, Datenübertragungsprotokoll und ein Wireless-Local-Area-Network-, abgekürzt WLAN (drahtloses lokales Netzwerk), Datenübertragungsprotokoll zu handhaben, und
- der Scheduler (308) dafür ausgelegt ist, die WLAN-Datenübertragung und Bluetooth-Datenübertragung zu schedulen,
- wobei der Scheduler (308) ferner dafür ausgelegt ist, eine Übertragung von WLAN-Paketen während WLAN-Übertragungsgelegenheiten und eine Übertragung erweiterter synchroner verbindungsorientierter, abgekürzt eSCO (extended synchronous connection oriented), Pakete während eSCO-Übertragungsfenstern unter Nutzung von Zeitablaufinformationen zu koordinieren, die durch einen globalen Zeitgeber (302) bereitgestellt werden, der von einem WLAN-Funkabschnitt und einem Bluetooth-Funkabschnitt des einzelnen Funkchips verwendet wird,
- **dadurch gekennzeichnet, dass**
- der Scheduler (308) dafür ausgelegt ist, bei Bedarf Bluetooth-Neuübertragungsinformationen und WLAN-Übertragungsgelegenheitsinformationen zum Schedulen einer erneuten Übertragung eines eSCO-Pakets zu nutzen, wobei der Scheduler (308) dafür ausgelegt ist, die Übertragung eines eSCO-Pakets zu schedulen und, wenn das eSCO-Paket in das WLAN-Übertragungsgelegenheitsfenster fällt, eine erneute Übertragung des eSCO-Pakets außerhalb des WLAN-Übertragungsgelegenheitsfensters unter Verwendung eines Neuübertragungsfensters zu schedulen.

9. System nach Anspruch 8,
wobei der Scheduler (308) dafür ausgelegt ist, ferner basierend auf zukünftigen WLAN-Übertragungsanforderungen und/oder zukünftigen Bluetooth-Übertragungsanforderungen WLAN-Übertragungen und/oder Bluetooth-Übertragungen zu schedulen.

10. System nach Anspruch 8,
wobei der einzelne Funkchip (204) dafür ausgelegt ist, die der WLAN-Datenübertragung zugewiesene Prioritätsebene zurückzustufen.

## Revendications

1. Procédé pour fournir une communication sans fil, le procédé comprenant une étape consistant à ordonnancer une communication de type réseau local sans fil WLAN, et une communication de type Bluetooth BT, dans une puce radio unique qui supporte au moins un protocole de communication Bluetooth et un protocole de communication WLAN sur la base de niveaux de priorité attribués à ladite communication WLAN et ladite communication Bluetooth,
dans lequel l'étape consistant à ordonnancer une communication WLAN et une communication Bluetooth comprend une étape consistant à coordonner une transmission de paquets WLAN au cours d'opportunités de transmission WLAN et une transmission de paquets avec connexion synchrone étendue eSCO, au cours de fenêtres de transmission eSCO en utilisant des informations de synchronisation fournies par une horloge mondiale (302) utilisée par une partie radio WLAN et une partie radio Bluetooth de la puce radio unique,
**caractérisé en ce que** l'étape consistant à coordonner la transmission de paquets WLAN et de paquets eSCO comprend les étapes consistant à :
utiliser des informations de retransmission Bluetooth et des informations d'opportunité de transmission WLAN pour ordonnancer une retransmission d'un paquet eSCO lorsque cela s'avère nécessaire ;
ordonnancer (506) une transmission d'un paquet eSCO ; et
ordonnancer (508, 510) une retransmission du paquet eSCO en dehors de la fenêtre d'opportunité de transmission WLAN en utilisant une fenêtre de retransmission si le paquet eSCO est à l'intérieur de la fenêtre d'opportunité de transmission WLAN.

2. Procédé selon la revendication 1, comprenant en outre une étape consistant à promouvoir (618) ledit niveau de priorité attribué à ladite communication WLAN.

3. Procédé selon la revendication 1, comprenant en outre une étape consistant à rétrograder (620) ledit niveau de priorité attribué à ladite communication WLAN.

4. Procédé selon la revendication 1, comprenant en outre une étape consistant à promouvoir (612) ledit niveau de priorité attribué à ladite communication Bluetooth.

5. Procédé selon la revendication 1, comprenant en outre une étape consistant à rétrograder (614) ledit niveau de priorité attribué à ladite communication Bluetooth.

6. Moyens de stockage lisibles par machine ayant, stocké sur ceux-ci, un programme informatique possédant au moins une section de code pour fournir une communication sans fil, l'au moins une section de code étant exécutable par une machine pour faire en sorte que la machine réalise des étapes comprenant une étape consistant à ordonnancer une communication de type réseau local sans fil WLAN, et une communication de type Bluetooth BT, dans une puce radio unique qui supporte au moins un protocole de communication Bluetooth et un protocole de communication WLAN sur la base de niveaux de priorité attribués à ladite communication WLAN et à ladite communication Bluetooth,
dans lequel l'étape consistant à ordonnancer une communication WLAN et une communication Bluetooth comprend une étape consistant à coordonner une transmission de paquets WLAN au cours d'opportunités de transmission WLAN et une transmission de paquets avec connexion synchrone étendue eSCO, au cours de fenêtres de transmission eSCO en utilisant des informations de synchronisation fournies par une horloge mondiale (302) utilisée par une partie radio WLAN et une partie radio Bluetooth de la puce radio unique,
**caractérisé en ce que** l'étape consistant à coordonner la transmission de paquets WLAN et de paquets eSCO comprend les étapes consistant à :
utiliser des informations de retransmission Bluetooth et des informations d'opportunité de transmission WLAN pour ordonnancer une retransmission d'un paquet eSCO lorsque cela s'avère nécessaire ;
ordonnancer (506) une transmission d'un paquet eSCO ; et
ordonnancer (508, 510) une retransmission du paquet eSCO en dehors de la fenêtre d'opportunité de transmission WLAN en utilisant une fenêtre de retransmission si le paquet eSCO est à l'intérieur de de la fenêtre d'opportunité de transmission WLAN.

7. Moyens de stockage selon la revendication 6, comprenant en outre un code pour promouvoir ledit niveau de priorité attribué à ladite communication WLAN.

8. Système pour fournir une communication sans fil, le système comprenant :
une puce radio unique comprenant un ordonnanceur (308) ;
ladite puce radio unique est adaptée pour supporter au moins un protocole de communication Bluetooth BT, et un protocole de communication de réseau local sans fil WLAN, sur la base de niveaux de priorité attribués à une communication WLAN et une communication Bluetooth ; et
ledit ordonnanceur (308) est adapté pour ordonnancer ladite communication WLAN et ladite communication Bluetooth, dans lequel
ledit ordonnanceur (308) est en outre adapté pour coordonner une transmission de paquets WLAN au cours d'opportunités de transmission WLAN et une transmission de paquets avec connexion synchrone étendue eSCO, au cours de fenêtres de transmission eSCO en utilisant des informations de synchronisation fournies par une horloge mondiale (302) utilisée par une partie radio WLAN et une partie radio Bluetooth de la puce radio unique,
**caractérisé en ce que**
ledit ordonnanceur (308) est adapté pour utiliser des informations de retransmission Bluetooth et des informations d'opportunité de transmission WLAN pour ordonnancer une retransmission d'un paquet eSCO lorsque cela s'avère nécessaire ; dans lequel ledit ordonnanceur (308) est adapté pour ordonnancer une transmission d'un paquet eSCO, et, si le paquet eSCO est à l'intérieur de la fenêtre d'opportunité de transmission WLAN, pour ordonnancer une retransmission du paquet eSCO en dehors de la fenêtre d'opportunité de transmission WLAN en utilisant une fenêtre de retransmission.

9. Système selon la revendication 8, dans lequel ledit ordonnanceur (308) est adapté pour ordonnancer des transmissions WLAN et/ou des transmissions Bluetooth sur la base en outre de futures exigences de transmission WLAN, et/ou de futures exigences de transmission Bluetooth.

10. Système selon la revendication 8, dans lequel ladite puce radio unique (204) est adaptée pour rétrograder ledit niveau de priorité attribué à ladite communication WLAN.
